# FASCICULE DE BREVET EUROPEEN

(11) **EP 2 821 224 B1**
(45) Date de publication et mention de la délivrance du brevet: **17.06.2020**
(21) Numéro de dépôt: 14184969.5
(22) Date de dépôt: 31.07.2012
(51) Int. Cl.: B32B 17/10

(54) **Procédé de fabrication d'un vitrage à éffet décoratif**
Herstellungsverfahren einer Dekorverglasung
Method for manufacturing a decorative glass panel

(30) Priorité: 04.08.2011 FR 1157161
(43) Date de publication de la demande: 07.01.2015
(62) Demande divisionnaire de: 12750458.7
(73) Titulaire: SAINT-GOBAIN GLASS FRANCE, 92400 Courbevoie (FR)
(72) Inventeur: Baquet, Erwan, 60200 Compiegne (FR); Levasseur, Fabien, 59200 Tourcoing (FR); Gouy, Aurélien, 60200 Compiègne (FR); Outin, Jean-François, 78670 Vilennes Sur Seine (FR)
(74) Mandataire: Saint-Gobain Recherche

(56) Documents cités:
- EP-A1- 0 238 301
- WO-A1-03/014033
- WO-A1-2009/039053
- DE-A1- 4 447 171
- DE-U1- 8 903 186
- DE-U1- 9 407 401
- FR-A1- 2 171 929
- FR-A1- 2 190 617
- JP-A- 2001 226 154
- US-A- 5 536 347
- US-A1- 2007 034 317
- US-A1- 2008 014 398

## Description

La présente invention concerne un vitrage, notamment à effet décoratif, combinant à la fois l'esthétique due à l'aspect en trois dimensions de certains revêtements textiles et la stabilité dans le temps des substrats verriers. Elle concerne également un procédé de fabrication de tels vitrages.

On connaît différents types de vitrages qui sont constitués de produits feuilletés, et qui comportent un élément décoratif qui est encapsulé entre deux feuilles de verre.

On a ainsi proposé un assemblage constitué d'une "feuille" de pierre dont chacune des faces est liée à une feuille de verre par un film intercalaire.

On a également proposé un assemblage dans lequel la feuille de pierre était remplacée par une image imprimée.

On a enfin proposé, dans le brevet JP 2001226154, un vitrage feuilleté constitué d'une couche de laine ou de fibres qui est prise en sandwich entre deux plaques de verre. Un tel vitrage est destiné à assurer deux fonctions, à savoir d'une part filtrer les rayons ultraviolets et, d'autre part, prévenir l'éclatement des feuilles de verre en cas de choc.

Le document US 2008/014398 A1 décrit un feuilleté comprenant un tissu de fils plats torsadés, mais pas un procédé pour l'obtenir.

L'enseignement du document FR 2 171 929 A1 se limite à l'incorporation de tissu dans un vitrage feuilleté en vue de le renforcer.

Le document DE 94 07 401 U1 décrit le feuilletage d'une feuille transparente telle que de verre et d'une feuille de fibres sous forme d'un mat par exemple ; une résine époxy ou polyester est citée comme moyen de feuilletage.

L'enseignement du document DE 89 03 186 U1 se limite à l'incorporation d'un tissu dans un vitrage feuilleté.

Le document EP 0 238 301 A1 décrit l'incorporation dans un vitrage feuilleté d'un tissu de polyester par l'association de PVC et d'un adhésif durcissant sous un rayonnement.

Le document DE 44 47 171 A1 décrit l'incorporation d'un tissu dans un vitrage feuilleté par élévation de la température et de la pression.

Le document WO 2009/039053 A1 décrit un procédé de feuilletage dans lequel une phase de mise en dépression ne commence pas simultanément à une phase de chauffage.

On connaît également par ailleurs certains revêtements textiles dont le caractère esthétique provient de leur structure même, c'est-à-dire que leur épaisseur entre pour une bonne part dans leur aspect esthétique. On parlera ci-après de produit textiles trois dimensions ou 3D.

Ces revêtements textiles sont particulièrement intéressants dans la mesure où leur aspect esthétique peut prendre des formes extrêmement variées et donner à des vitrages un aspect en trois dimensions remarquable.

Aucun des vitrages feuilletés mentionnés précédemment ne permet de mettre en évidence l'aspect 3D de tels revêtements textiles.

L'une des difficultés rencontrées lorsque l'on souhaite constituer un vitrage feuilleté encapsulant des revêtements textiles 3D est que ces derniers possèdent une texture particulièrement fragile qui, lorsqu'on la soumet aux méthodes classiques d'encapsulage, a pour effet de s'écraser sous l'effet de la dépression à laquelle on est contraint de les soumettre, si bien qu'ils perdent ainsi leur caractère 3D qui constitue l'essentiel de leur intérêt sur le plan de l'esthétique.

La présente invention a pour but de proposer un procédé permettant d'éviter un tel écrasement et d'assurer la réalisation de vitrages feuilletés comportant à cœur un matériau textile de type 3D qui conserve son aspect tridimensionnel après l'opération d'encapsulage. La présente invention a ainsi pour objet un procédé de fabrication d'un vitrage de type feuilleté comportant une âme dont au moins l'une des faces est liée à un substrat verrier par un intercalaire de feuilletage constitué d'un PVB, caractérisé en ce qu'il comporte :
- une étape d'assemblage d'un ensemble constitué dudit substrat verrier et dudit intercalaire de feuilletage sur une âme constituée d'un revêtement textile de type 3D,
- une étape formée de plusieurs phases comprenant une phase de chauffage, une phase de maintien en température, et une phase de refroidissement dudit ensemble et, simultanément, une phase de mise en dépression, une phase de maintien en dépression et une phase de remise à la pression ambiante suivant un profil température/pression spécifique tel que la phase de mise en dépression est assurée pendant au moins une partie de la phase de maintien en température,
- en ce que la phase de chauffage est assurée avec une pente de montée en température de l'ordre de 2,6°C/min,
- en ce que la phase de maintien en température s'effectue entre 70°C et 100°C et préférentiellement aux environs de 80°C, et
- en ce que la phase de mise en dépression commence simultanément à la phase de chauffage.

La phase de refroidissement pourra être assurée avec une pente de descente en température de l'ordre de 2,6°C/min. La phase de mise en dépression pourra être assurée avec une pente de descente en pression de l'ordre de 0,8.10⁴ Pa/min et la phase de maintien en dépression pourra s'effectuer entre 10⁴ Pa et 3.10⁴ Pa et préférentiellement aux environs de 2.10⁴ Pa. Par ailleurs la phase de remontée à la pression ambiante pourra être assurée avec une pente de l'ordre de 0,8.10⁴ Pa/min. La phase de maintien en dépression pourra s'étendre sensiblement pour moitié pendant la phase de chauffage et pour moitié pendant la phase de maintien en température.

La présente invention est particulièrement intéressante en ce qu'elle permet de disposer d'un vitrage dont l'aspect esthétique est extrêmement proche de celui procuré par le matériau textile lui-même, tout en bénéficiant de la protection assurée par les parois de verre contre la poussière et les agressions diverses.

Dans une variante de l'invention on peut faire appel à un intercalaire de feuilletage apte à filtrer les rayons ultra-violets, si bien que ce dernier préserve le matériau textile des agressions solaires susceptibles de modifier dans le temps ses qualités esthétiques.

On décrira ci-après, à titre d'exemple non limitatif, une forme d'exécution de la présente invention, en référence au dessin annexé sur lequel :
- les figures 4 et 5 sont des diagrammes température et pression en fonction du temps montrant les profils de chauffage/refroidissement ainsi que les profils dépression/remontée à pression ambiante de deux modes de mise en oeuvre de l'invention utilisant le PVB en tant qu'intercalaire de feuilletage,
- la figure 6 est une vue en coupe transversale représentant un vitrage suivant l'invention.

Suivant l'invention, on fait appel à un type de matériau intercalaire, à savoir le polyvinylbutyral, dit ci-après PVB.

On a constaté que toutes choses égales par ailleurs le profil pression/température était alors notablement différent de celui mis en œuvre avec l'EVA.

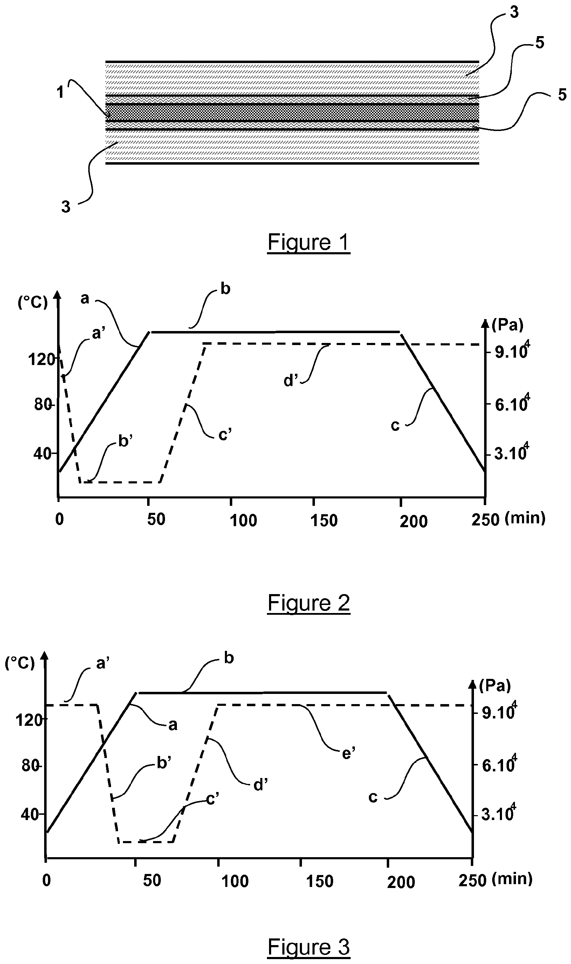

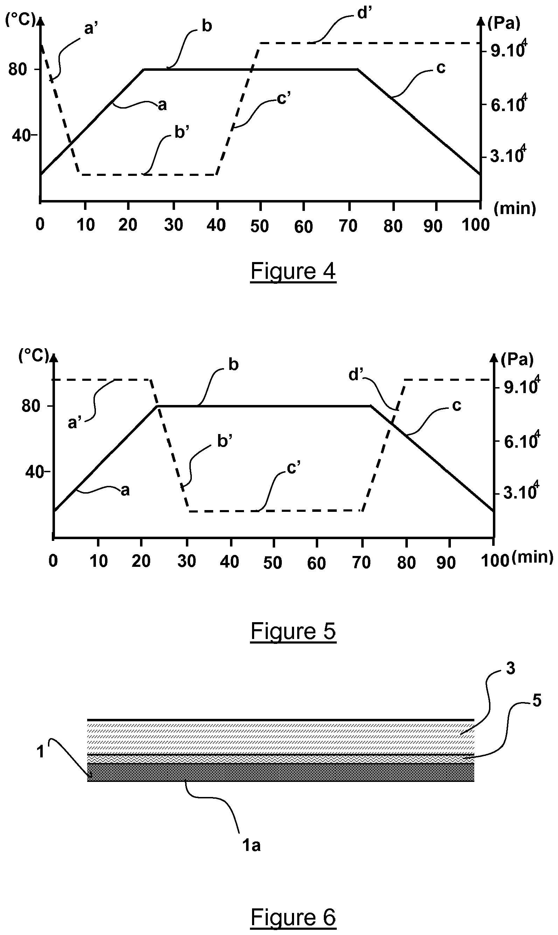

On a représenté sur la figure 4 un tel profil. On constate que dans une phase a on chauffe l'assemblage de façon progressive à partir de la température ambiante jusqu'à atteindre la température de réticulation du PVB, soit environ 80°C, avec une pente de montée en température d'environ 2,6°C/min. Puis, au cours d'une phase b, on maintient cette température pendant une durée d'environ 50min avant de refroidir l'assemblage, au cours d'une phase c, jusqu'à la température ambiante avec une pente de refroidissement voisine de la pente de chauffage.

Pendant le même temps, au cours d'une phase a', on diminue la pression dans l'enceinte jusqu'à atteindre une pression de l'ordre de 2.10⁴ Pa puis on maintient celle-ci, au cours d'une phase b', jusqu'à la fin de la montée en température et bien au-delà en fait pendant environ le tiers de la phase b du palier de chauffage. Puis on remonte jusqu'à la pression atmosphérique avec une pente voisine de la pente de mise en dépression. La pression atmosphérique est ensuite maintenue jusqu'à la fin du cycle.

On constate qu'un tel profil permet d'éliminer le gaz de désorption du PVB tout en maintenant la structure 3D du matériau textile.

Dans une autre forme de mise en œuvre de la présente invention on a, ainsi que représenté sur la figure 5, décalé dans le temps, au cours d'une phase a', la mise en dépression de l'assemblage jusqu'à la fin de la phase de montée en température a, et l'on a maintenu la dépression dans l'enceinte au cours d'une phase c' pendant toute la durée de montée en température de la phase b. Puis on a rétabli la pression dans l'enceinte au cours d'une phase d'.

On constate ainsi que dans le cas où l'on utilise du PVB en tant que matériau intercalaire il est essentiel de diminuer la pression pendant au moins une partie du palier de maintien en température de l'assemblage.

Dans une mise en œuvre de l'invention représentée sur la figure 6, le vitrage ne comportera qu'un substrat verrier extérieur 3, si bien que l'une des faces la du matériau textile 1 se trouvera à l'air libre. Un tel mode de mise en œuvre de l'invention est intéressant en ce qu'il permet, tout en protégeant l'une des faces de celui-ci, de fournir un accès visuel et tactile direct à son autre face.

Le substrat verrier 3 peut bien entendu être de diverses natures et être notamment constitué de verre clair, de verre à couche, de verre teinté, de verre miroir etc...

## Revendications

1. Procédé de fabrication d'un vitrage de type feuilleté comportant une âme (1) dont au moins l'une des faces est liée à un substrat verrier (3) par un intercalaire de feuilletage (5) constitué d'un PVB, **caractérisé en ce qu'**il comporte :
- une étape d'assemblage d'un ensemble constitué dudit substrat verrier et dudit intercalaire de feuilletage sur une âme constituée d'un revêtement textile de type 3D,
- une étape formée de plusieurs phases comprenant une phase de chauffage, une phase de maintien en température, et une phase de refroidissement dudit ensemble et, simultanément, une phase de mise en dépression, une phase de maintien en dépression et une phase de remise à la pression ambiante suivant un profil température/pression spécifique tel que la phase de mise en dépression est assurée pendant au moins une partie de la phase de maintien en température,
- **en ce que** la phase de chauffage est assurée avec une pente de montée en température de l'ordre de 2,6°C/min,
- **en ce que** la phase de maintien en température s'effectue entre 70°C et 100°C et préférentiellement aux environs de 80°C, et
- **en ce que** la phase de mise en dépression commence simultanément à la phase de chauffage.

2. Procédé de fabrication d'un vitrage suivant la revendication 1 **caractérisé en ce que** la phase de refroidissement est assurée avec une pente de descente en température de l'ordre de 2,6°C/min.

3. Procédé de fabrication d'un vitrage suivant l'une des revendications 1 ou 2 **caractérisé en ce que** la phase de mise en dépression est assurée avec une pente de descente en pression de l'ordre de 0,8.10⁴ Pa/min.

4. Procédé de fabrication d'un vitrage suivant l'une des revendications 1 à 3 **caractérisé en ce que** la phase de maintien en dépression s'effectue entre 10⁴ Pa et 3.10⁴ Pa et préférentiellement aux environs de 2.10⁴ Pa.

5. Procédé de fabrication d'un vitrage suivant l'une des revendications 1 à 4 **caractérisé en ce que** la phase de remontée à la pression ambiante est assurée avec une pente de l'ordre de 0,8.10⁴ Pa/min.

6. Procédé de fabrication d'un vitrage suivant la revendication 1 **caractérisé en ce que** la phase de maintien en dépression s'étend sensiblement pour moitié pendant la phase de chauffage et pour moitié pendant la phase de maintien en température.

## Patentansprüche

1. Verfahren zur Herstellung einer Verglasung des Typs der Verbundglasscheibe, umfassend einen Kern (1), wovon mindestens eine der Seiten mit einem Glassubstrat (3) durch eine Laminatzwischenschicht (5), die aus einem PVB besteht, verbunden ist, **dadurch gekennzeichnet, dass** es aufweist:
- einen Schritt des Zusammenbauens einer Anordnung, die aus dem Glassubstrat und der Laminatzwischenschicht besteht, auf einem Kern, der aus einer Textilbeschichtung des Typs der 3D-Beschichtung besteht,
- einen Schritt, der aus mehreren Phasen gebildet ist, umfassend eine Heizphase, eine Temperaturerhaltungsphase und eine Abkühlphase der Anordnung und gleichzeitig eine Phase zum unter Unterdruck Setzen, eine Phase zum Aufrechterhalten des Unterdrucks und eine Phase zum Rücksetzen auf Umgebungsdruck gemäß einem spezifischen Temperatur-/Druckprofil, derart, dass die Phase zum unter Unterdruck Setzen während mindestens eines Teils der Temperaturerhaltungsphase gewährleistet wird,
- dadurch, dass die Aufheizphase mit einer Temperaturanstiegsneigung in der Größenordnung von 2,6°C/min gewährleistet wird,
- dadurch, dass die Temperaturerhaltungsphase zwischen 70°C und 100°C und vorzugsweise bei etwa 80°C durchgeführt wird, und
- dadurch, dass die Phase zum unter Unterdruck Setzen gleichzeitig mit der Heizphase beginnt.

2. Verfahren zur Herstellung einer Verglasung nach Anspruch 1, **dadurch gekennzeichnet, dass** die Abkühlphase mit einer Temperaturabnahmeneigung in der Größenordnung von 2,6°C/min gewährleistet wird.

3. Verfahren zur Herstellung einer Verglasung nach einem der Ansprüche 1 oder 2, **dadurch gekennzeichnet, dass** die Phase zum unter Unterdruck Setzen mit einer Druckabnahmeneigung in der Größenordnung von 0,8.10⁴Pa/min gewährleistet wird.

4. Verfahren zur Herstellung einer Verglasung nach einem der Ansprüche 1 bis 3, **dadurch gekennzeichnet, dass** die Phase zum Aufrechterhalten des Unterdrucks zwischen 10⁴ Pa und 3.10⁴ Pa und vorzugsweise bei etwa 2.10⁴ Pa durchgeführt wird.

5. Verfahren zur Herstellung einer Verglasung nach einem der Ansprüche 1 bis 4, **dadurch gekennzeichnet, dass** die Phase zum Rücksetzen auf Umgebungsdruck mit einer Neigung in der Größenordnung von 0,8.10⁴ Pa/min gewährleistet wird.

6. Verfahren zur Herstellung einer Verglasung nach Anspruch 1, **dadurch gekennzeichnet, dass** die Phase zum Aufrechterhalten des Unterdrucks im Wesentlichen zur Hälfte während der Heizphase und zur Hälfte während der Temperaturerhaltungsphase erfolgt.

## Claims

1. Process for manufacturing a laminated glazing unit comprising a core (1) at least one of the faces of which is joined to a glazing substrate (3) by a lamination interlayer (5) made of PVB, **characterized in that** it comprises:
- a step of joining an assembly consisting of said glazing substrate and said lamination interlayer to a core consisting of a 3D textile coating; and
- a step formed from a plurality of phases comprising a heating phase, a temperature maintenance phase and a phase of cooling said assembly and, simultaneously, a phase of applying a vacuum, a vacuum maintenance phase and a phase of returning said assembly to ambient pressure following a specific temperature/pressure profile such that the phase of applying a vacuum is carried out during at least part of the temperature maintenance phase,
- **in that** the heating phase is implemented with an upward temperature slope of about 2.6°C/min,
- **in that** the temperature maintenance phase is carried out between 70°C and 100°C and preferably at about 80°C, and
- **in that** the phase of applying a vacuum starts at the same time as the heating phase.

2. Process for manufacturing a glazing unit according to Claim 1, **characterized in that** the cooling phase is implemented with a downward temperature slope of about 2.6°C/min.

3. Process for manufacturing a glazing unit according to either of Claims 1 and 2, **characterized in that** the phase of applying a vacuum is implemented with a downward pressure slope of about 0.8×10⁴ Pa/min.

4. Process for manufacturing a glazing unit according to one of Claims 1 to 3, **characterized in that** the vacuum maintenance phase is carried out between 1x10⁴ Pa and 3×10⁴ Pa and preferably at about 2×10⁴ Pa.

5. Process for manufacturing a glazing unit according to one of Claims 1 to 4, **characterized in that** the phase of returning to ambient pressure is implemented with a slope of about 0.8×10⁴ Pa/min.

6. Process for manufacturing a glazing unit according to Claim 1, **characterized in that** substantially half of the phase of applying a vacuum is during the heating phase and half during the temperature maintenance phase.
